Europäisches Patentamt

European Patent Office

Office européen des brevets

(11) Veröffentlichungsnummer: **0 012 247**
**A1**

# (12) EUROPÄISCHE PATENTANMELDUNG

(21) Anmeldenummer: **79104614.7**

(51) Int. Cl.³: **H 04 Q 11/04, H 04 B 3/23**

(22) Anmeldetag: **20.11.79**

(30) Priorität: **08.12.78 DE 2853167**

(43) Veröffentlichungstag der Anmeldung: **25.06.80**
**Patentblatt 80/13**

(84) Benannte Vertragsstaaten: **AT CH DE FR GB IT NL SE**

(71) Anmelder: **SIEMENS AKTIENGESELLSCHAFT Berlin und München, Postfach 22 02 61, D-8000 München 22 (DE)**

(72) Erfinder: **Lechner, Robert, Dipl.-Ing., Haidfeldstrasse 5, D-8156 Otterfing (DE)**

(54) **Teilnehmerschaltung.**

(57) Die Erfindung betrifft eine Teilnehmerschaltung als Bestandteil einer digitalen Zeitmultiplexvermittlungsstelle, die eine Gabelschaltung für die Übergänge zwischen Zweidrahtübertragungsbetrieb auf der Teilnehmerseite und Vierdrahtübertragungsbetrieb auf der Vermittlungsseite enthält. Bei den Gabelschaltungen solcher Gabelschaltungen treten Echos auf, so daß ferner ein Echokompensator (EK) vorhanden sein muß, der zweckmäßigerweise unter Verwendung eines Transversalfilters aufgebaut ist. Um die Koeffizienten dieses Transversalfilters in einfacher Weise einstellen zu können, wird erfindungsgemäß durch das beim Beginn eines Verbindungsaufbaus auftretende Schleifenschlußsignal (S) ein Testimpuls ausgelöst, dessen an der Gabelschaltung (G) auftretende Echos zur Bildung der Koeffizienten herangezogen werden.

SIEMENS AKTIENGESELLSCHAFT     Unser Zeichen
Berlin und München             VPA
                               78 P 6 2 9 0 EUR

## Teilnehmerschaltung

Die Erfindung betrifft eine Teilnehmerschaltung als Bestandteil einer digitalen Zeitmultiplexvermittlungsstelle mit neben anderen teilnehmerindividuellen Einrichtungen einer Schaltungsanordnung zur Analog-Digital-Wandlung und umgekehrt zur Digital-Analog-Wandlung und einer Gabelschaltung für die Übergänge zwischen Zweidrahtübertragungsbetrieb auf der Teilneherseite und Vierdrahtübertragungsbetrieb auf der Vermittlungsseite.

An der Gabelschaltung einer solchen Teilnehmerschaltung treten Reflektionen auf, die insbesondere dann, wenn die Laufzeiten länger sind, als besonders störend empfunden werden. Wegen der großen Streutwerte der Impedanz der an eine solche Teilnehmerschaltung angeschlossenen Teilnehmeranschlußleitung ist es nicht

Br 1 Kel /7.12.1978

möglich, durch eine einzige Leitungsnachbildung an der Gabelschaltung für jeden Betriebsfall ausreichend hohe Rückflußdämpfungswerte zu erzielen, die solche Echosignale unschädlich machen. Für Fernsprechverbindungen über Satelliten und für Datenübertragung auf Zweidrahtleitungen im Duplexbetrieb ist aus entsprechenden Überlegungen heraus schon der Einsatz von Echokompensatoren vorgeschlagen worden, für deren Realisierung aus Laufzeitketten gebildete Filter also Transversalfilter oder Rekursivfilter mit einstellbaren Koeffizienten Anwendung finden. Um eine automatische Einstellung der Koeffizienten zu gewährleisten, die zu einer völligen Kompensation der Echosignale führt, ist jedoch ein derartig komplexer Zusammenhang der maßgeblichen elektrischen Größen zu berücksichtigen, daß eine technische Realisierung solcher Kompensatoren einen zu großen technologischen Aufwand erfordert.

Aufgabe der Erfindung ist es, eine Teilnehmerschaltung der oben angegebenen Art anzugeben, die trotz der geschilderten Umstände eine durch Echosignale ungestörten Betrieb gewährleistet, und die in relativ wenig aufwendiger Art und Weise realisiert werden kann.

Erfindungsgemäß wird diese Aufgabe bei der erwähnten Teilnehmerschaltung dadurch gelöst, daß diese einen im Digitalbereich der Vierdrahtseite angeordneten digitalen Echokompensator aufweist, der unter Verwendung eines in Form einer veränderlich bewertete Ausgangssignale liefernden Laufzeitkette ausgebildeten Filters aufgebaut ist, das im Kompensationsbetrieb aus den Signalen, die von der Vierdrahtseite her auch an die Gabelschaltung gelangen, Kompensationssignale hergeleitet werden, die den entsprechenden von der Gabelschaltung reflektierten Echosignalen überlagert werden, und dessen Bewertungskoeffizienten in einem Einstellbetrieb, der jeweils durch das Schleifenschlußsignal beim Beginn eines Verbindungsaufbaus eingeleitet wird, aufgrund eines Testimpulses eingestellt werden, der anstelle des auf der Vierdrahtseite ankommenden Signals der Gabelschaltung zugeführt wird und dessen Echosignale nach Mittelung mit entsprechenden bisher gespeicherten Koeffizienten als neue Koeffizienten eingespeichert werden.

Aufgrund der Einstellung der Koeffizienten jeweils zu Gesprächsbeginn mit Hilfe eines Testimpulses läßt sich das Transversalfilter und insbesondere dessen der Koeffizientenanpassung dienende Teile schaltungstechnisch sehr einfach realisieren. Da der Echokompensator nur eine Teilnehmerschaltung zu bedienen hat, also nur mit relativ geringfügigen Koeffizientenänderungen von Einstellung zu Einstellung, also von Gesprächsbeginn zu Gesprächsbeginn zu rechnen ist, wird relativ schnell eine exakte Koeffizienteneinstellung erreicht, im Gegensatz zu einer Konzeption, bei der ein zentraler Echokompensator vorgesehen wäre, der für mehrere Teilnehmerschaltungen zuständig ist. Im letztgenannten Falle sind nämlich unter Umständen beträchtliche Impedanzunterschiede zu berücksichtigen, mit der Folge, daß eine richtige Koeffizienteneinstellung je Teilnehmerschaltung eine ganze Reihe von Testimpulsen erforderlich machen würde, was wiederum insgesamt gesehen zu zeitlichen Schwierigkeiten führen könnte.

Das bei der erfindungsgemäßen Teilnehmerschaltung eingesetzte Filter kann entweder ein sogenanntes Rekursivfilter oder aber ein Transversalfilter sein.

Durch eine weitere Ausgestaltung der Erfindung wird
angegeben, wie im Falle der Verwendung eines Transversalfilters dieses in schaltungstechnisch günstiger
Weise aufgebaut sein kann. Die dementsprechende Konzeption ist dadurch gekennzeichnet, daß das Filter außer
einem die Laufzeitkette darstellenden ersten Schieberegister, dem die von der Vierdrahtseite herkommenden
und auch an die Gabelschaltung gelangenden Signale
zugeführt werden, ein zweites gleich langes Schieberegister für die Speicherung der Bewertungskoeffizienten
aufweist, dessen Inhalt in beiden Richtungen verschoben
werden kann, daß bei diesem Schieberegister im Einstellbetrieb nacheinander in der einen Schieberichtung
die enthaltenen, während des vorhergegangenen Einstellbetriebs gebildeten Koeffizienten an einem Ende ausgeschoben und mit den Echosignalen des Testimpulses
zum Zwecke der Mitteilung zusammengeführt werden,
woraufhin am anderen Ende die entsprechend korrigierten Koeffizienten wieder eingeschrieben werden, daß
im Kompensationsbetrieb zunächst das auf der Vierdrahtseite ankommende Signal in die erste Stufe des ersten
Schieberegisters eingeschrieben wird und danach beide
Schieberegister zu einem Ring geschlossen und mit
dem gleichen Schiebetakt beaufschlagt werden, wobei
beim zweiten Schieberegister das Schieben nunmehr
in der anderen Schieberichtung erfolgt und wobei die
dabei an den Serienausgängen der beiden Schieberegister
auftretenden Signale in einem Multiplizierer miteinander verknüpft werden, dessen Ausgangssignale in einem Summierer aufsummiert werden, der dann die Kompensationsgrößen liefert, die in einem Subtrahierer von dem von der Gabelschaltung herkommenden Echo behafteten Signalen subtrahiert werden.

Nachstehend wird die Erfindung anhand von 2 Figuren näher erläutert. Von den Figuren zeigen:

Figur 1 ein Blockschaltbild der erfindungsgemäßen Teilnehmerschaltung,
Figur 2 das Ausführungsbeispiel eines für die Teilnehmerschaltung gemäß Figur 1 verwendbaren Echokompensators.

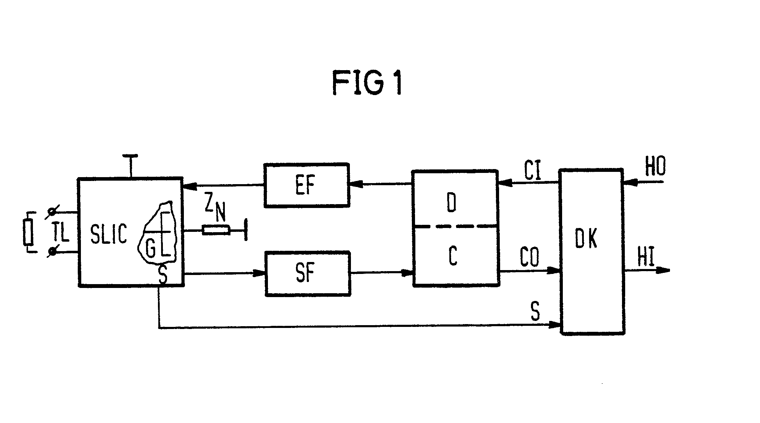

Die Teilnehmerschaltung gemäß Figur 1 weist eine Einheit SLIC auf, die den eigentlichen Übergang zwischen der zweidrähtigen Teilnehmeranschlußleitung TL mit der Impedanz ZL und der Vierdrahtseite in der Vermittlungsstelle darstellt, deren Bestandteil die Teilnehmerschaltung ist. Diese Einheit weist daher neben Schaltmitteln zur Teilnehmerspeisung, für den Überspannungsschutz, die Rufanschaltung und die Signalisierung eine Gabelschaltung für die Übergänge zwischen Zweidrahtübertragungsbetrieb auf der Teilnehmerseite und Vierdrahtübertragungsbetrieb auf der Vermittlungsseite auf, die hier mit G lediglich symbolisch angedeutet ist. Zu dieser Gabelschaltung gehört auch eine Leitungsnachbildung ZN. In den beiden auf der Vierdrahtseite der erwähnten Einrichtung SLIC liegenden Leitungszweige liegen ein Sendefilger SF bzw. ein Empfangsfilter EF. Sie führen im Falle des Sendezweiges zu einer Schaltungsanordnung C zur Analog-Digitalwandlung bzw. nehmen im Falle des Empfangszweiges von einer Schaltungsanordnung D zur Digital-Analogwandlung Signale auf. Die beiden Anordnungen D und C sind in der Praxis zu einer Einheit vereinigt, wobei für die beiden Wandlungsarten einzelne Teile gemeinsam ausgenutzt werden.

Der Ausgang der Anordnung C zur Analog-Digitalwandlung bzw. der Eingang der Anordnung D zur Digital-Analogwandlung sind mit einem digitalen Echokompensator DK verbunden, der mit weiteren Einrichtungen der Vermittlungsstelle, insbesondere mit dem Koppelfeld über einen Empfangszweig HO und einen Sendezweig HI verbunden ist.

Über eine zwischen der Einrichtung SLIC und dem Echokompensator DK bestehende Leitungsverbindung wird ein Signal S geliefert, das den im Zusammenhang mit dem Beginn eines Verbindungsaufbau stehenden Schleifenschluß der Teilnehmerleitungsschleife anzeigt und das, wie noch erläutert werden wird, beim Echokompensator DK die Auslösung eines Testimpulses bewirkt.

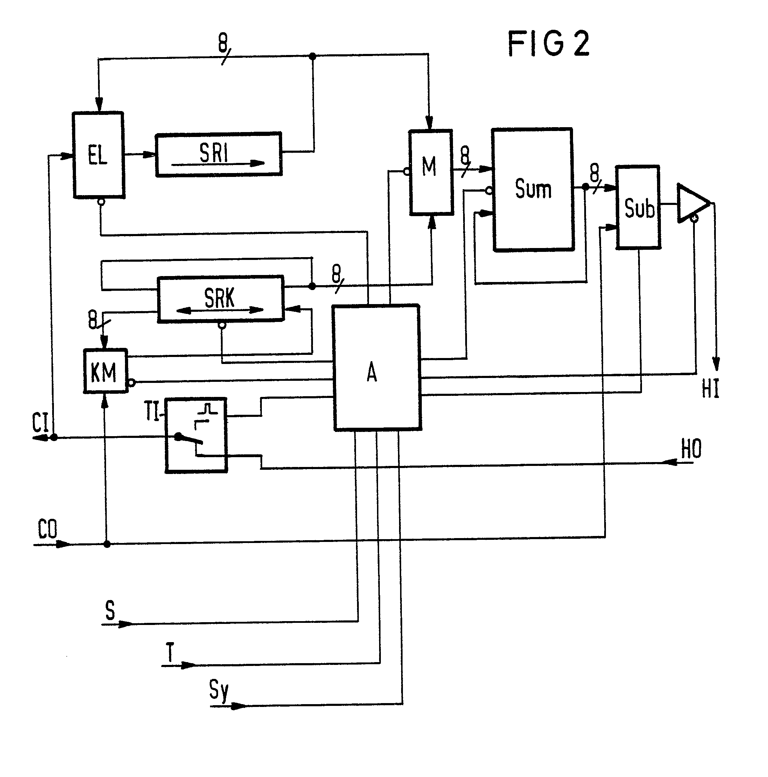

In Figur 2 ist ein Ausführungsbeispiel eines Echokompensators unter Verwendung eines Transversalfilters dargestellt. Auf der linken Seite dieser Figur sieht man die Anschlüsse CO und CI, die wie in Fig.1 dargestellt, von der Einrichtung C bzw. D herkommen bzw. zu dieser führen. Auf der rechten Seite sind der Sendezweig HI bzw. der Empfangszweig HO dargestellt, die, wie anhand der Figur 1 erläutert, die Verbindung mit weiteren Einrichtungen der Vermittlungsstelle herstellen. Das Transversalfilter des Echokompensators gemäß dieser Figur wird im wesentlichen aus dem Informationsschieberegister SRI, aus dem Koeffizientenschieberegister SRK einem Multiplizierer M und einem Summierer S gebildet.

Im eigentlichen Kompensationsbetrieb werden die auf dem Sendezweig HO ankommenden Signale, die über den Zweig CI und die gemäß Figur 1 daran angeschlossenen Einrichtungen auch an die Gabelschaltung G und schließlich zum betreffenden Teilnehmer gelangen über eine
Einschreiblogik EL, in der auch eine Serien-Parallel-
Wandlung erfolgt, jeweils in die erste Stufe des Schieberegisters SRI eingeschoben. Dieses Schieberegister
besteht demnach aus einer Reihe von Schieberegisterstufen, die jeweils 8 Stufenteile für die 8 Bit eines
PCM-Wortes umfassen. Die Länge des Schieberegisters
ist von den erwarteten Echodauern abhängig, die
bei den üblichen Teilnehmerleitungsschleifen etwa
3 ms betragen. Die Einschreiblogik EL bewirkt außerdem, daß nach einem derartigen Einschreiben einer Information, mit der Folge, daß die in der letzten Schiebe
registerstufe enthaltene Information ausgeschoben,
und nicht weiter verarbeitet wird, weitere Informationsschiebungen stattfinden, in deren Verlauf jedoch die
jeweils ausgeschobene Information wieder in die erste
Schieberegisterstufe eingetragen wird, das Schieberegister also während dieser Betriebsphase zu einem
Ring geschlossen ist.

Das Koeffizientenschieberegister SRK ist gleich lang
wie das Informationsschieberegister SRI. Die in ihm
befindlichen Informationen können in beiden Richtungen
verschoben werden. Der Informationseintrag in dieses
Schieberegister erfolgt bei der hier gewählten Darstellung am rechten Ende und zwar von einer Einrichtung
KM zur Koeffizientenmittelung aus. Dieser Einrichtung
werden auf dem Leitungszweig CO auftretende Signale,
die von der Gabelschaltung G in der Einrichtung SLIC
herkommen, und unter denen auch durch Reflektion an der Gabelschaltung entstehende Echosignale sind, zugeführt. Andererseits empfängt die Einrichtung KM die Informationen, die im Linksschiebebetrieb am linken Ende des Koeffizientenschieberegisters SRK auftreten. Der Koeffizient mit dem gebildeten Mittelwert wird dann, wie erwähnt, am rechten Ende dieses Schieberegisters wieder eingetragen. Eine solche Betriebsweise findet im Einstellbetrieb statt. Im Kompensationsbetrieb ist das Schieberegister SRK auf Rechtsschiebebetrieb umgeschaltet und zu einem Ring geschlossen, so daß die am rechten Ende ausgeschobenen Informationen wieder am linken Ende eingetragen werden.

Der Multiplizierer M multipliziert jeweils die im Kompensationsbetrieb am rechten Ende des Informationsschieberegisters SRI auftretenden PCM-Wörter mit den gleichzeitig am Ausgang des Schieberegisters SRK auftretenden Koeffizienten. Das Ausgangssignal des Multiplizierers M wird mit Hilfe eines Summierers Sum aufsummiert.

Weiterer Bestandteil des Echokompensators gemäß Figur 2 ist ein Subtrahierer Sub der im Kompensationsbetrieb von dem auf dem Leitungszweig CO von der Gabelschaltung herkommenden echobehafteten Signal die vom Summierer Sum gelieferte Ausgangsgröße subtrahiert. Das Ausgangssignal des Subtrahierers Sub wird dann über den Leitungszweig HI zu weiteren Einrichtungen der Vermittlungsstelle geleitet.

Zum Echokompensator der erfindungsgemäßen Teilnehmerschaltung gehört auch eine Einrichtung TI, in der ein Testimpuls erzeugt und eine Aufschaltung dieses Testimpulses auf den Leitungszweig CI während des Einstellbetriebs bzw. eine Umschaltung im Kompensationsbetrieb vorgenommen wird, durch die anstelle des Testimpulses die auf dem Leitungszweig HO ankommenden Signale an den Leitungszweig CI bzw. die Einschreiblogik EL gelangen.

Die bisher geschilderten Vorgänge, insbesondere die mit der Umschaltung von Einstellbetrieb auf Kompensationsbetrieb verbundenen, werden durch eine Ablaufsteuerung A in ihrem Zeitablauf bestimmt, der in erser Linie das erwähnte Schleifenschlußsignal S ein Amtstakt T und ein der Synchronisation dienendes Kriterium Sy zugeführt werden.

Nachstehend wird noch näher auf die Funktionsweise der erfindungsgemäßen Teilnehmerschaltung eingegangen. Wenn zu Beginn eines Verbindungsaufbaus aufgrund des Teilnehmerleitungsschleifenschlusses von der Einrichtung SLIC her das Signal S an den digitalen Echokompensator DK gelangt, wird durch die Ablaufsteuerung A veranlaßt, daß das Signal S entprellt wird und nach einer der Einschwingzeit der Anschlußleitung entsprechenden Verzögerungszeit ein Testimpuls auf dem Leitungsabschnitt CI an die Gabelschaltung G gelangt, mit der Folge, daß auf dem Leitungsabschnitt CO entsprechende Echosignale auftreten. Diese Echosignale sind gegebenenfalls durch Raumgeräusche überlagert, entsprechen sonst aber dem gesuchten Koeffizienten für das Transversalfilter. Durch die Einrichtung KM zur Mittelwertbildung, der, wie angedeutet, bei dem nun herrschenden Linksschiebebetrieb des Koeffizientenschieberegisters SRK außer diesen Echosignalen Koeffizienten zugeführt werden, die während der vorangegangenen Einstellbetriebsphase gebildet worden sind, wird durch die Mittelwertbildung der Einfluß der erwähnten Raumgeräusche eliminiert.

Im Kompensationsbetrieb wird die Weitergabe des Testimpulses unterbunden, stattdessen werden die auf dem Leitungszweig HO ankommenden Signale, die Fernsprechinformationen darstellen, einerseits an den Leitungszweig CI und damit über die dazwischenliegenden Einrichtungen an die Gabelschaltung G weitergegeben, andererseits über die Einschreiblogik EL in das Informationsschieberegister SR1 eingeschrieben. Bei jedem Eintrag eines PCM-Worts im ersten Teil eines Abtastpulsrahmens wird das in der ausgangsseitigen Schieberegisterstufe von SR befindliche PCM-Wort, das vorangegangenen Abtastproben entspricht, ausgeschoben, ohne daß es bei einer der an diese ausgangsseitige Schieberegisterstufe angeschlossenen Einheiten, also bei der Einschreiblogk EL und beim Multiplizierer M Auswirkungen haben kann, was durch entsprechende Beeinflussung dieser Einheiten durch die Ablaufsteuerung A gewährleistet ist. Im verbleibenden Teil des Abtastpulsrahmens werden das Informationsschieberegister SRI zu einem Ring geschlossen und das Koeffizientenschieberegister SRK auf Rechtsschiebebetrieb umgeschaltet, in dem es ebenfalls einen Ring darstellt. Da beide Schieberegister während dieses Teils des Abtastpulsrahmens vom gleichen Schiebetakt beaufschlagt werden, gelangen jeweils gleichzeitig aus dem Informationsschieberegister ein PCM-Wort und aus dem Koeffizientenschieberegister ein Koeffizient an den Multiplizierer M, in dem das jeweilige PCM-Wort durch Multiplikation mit dem Koeffizienten entsprechend bewertet wird. Die Ausgangssignale des Multiplizierers werden durch den Summierer Sum aufsummiert. Das Ausgangssignal dieses Summierers stellt damit eine aus dem auf dem Leitungszweig HO ankommenden Signal gewonnene Kompensationsgröße dar.

Diese wird nun dem Subtrahierer Sub zugeführt und dort von dem an dessen zweiten Eingang gelangenden, auf dem Leitungszweig CO von der Gabelschaltung G her ankommenden Signal subtrahiert. Bei dem letztgenannten Signal handelt es sich um ein aus dem Nutzsignal, das von dem an der Zweidrahtseite der Gabelschaltung angeschlossenen Teilnehmer kommt, und aus Echosignalen zusammengesetztes Signal handelt. Das von dem Subtrahierer Sub auf den Leitungszweig HI abgegebene Signal ist demnach, wie beabsichtigt, von Echosignalen befreit.

<u>Patentansprüche</u>

1. Teilnehmerschaltung als Bestandteil einer digitalen
Zeitmultiplexvermittlungsstelle mit neben anderen
teilnehmerindividuellen Einrichtungen einer Schaltungsanordnung zur Analog-Digital-Wandlung und umgekehrt zur
Digital-Analog-Wandlung und einer Gabelschaltung für
die Übergänge zwischen Zweidrahtübertragungsbetrieb auf
der Teilnehmerseite und Vierdrahtübertragungsbetrieb
auf der Vermittlungsseite, dadurch gekennzeichnet, daß
sie einen im Digitalbereich der Vierdrahtseite angeordneten digitalen Echokompensator (EK) aufweist, der
unter Verwendung eines in Form einer veränderlich bewertete Ausgangssignale liefernden Laufzeitkette (SEI)
ausgebildeten Filters aufgebaut ist, durch das im Kompensationsbetrieb aus den Signalen, die von der Vierdrahtseite (HO) her auch an die Gabelschaltung (G)
gelangen, Kompensationssignale hergeleitet werden,
die den entsprechenden von der Gabelschaltung (G)
reflektierten Echosignalen überlagert werden und dessen
Bewertungskoeffizienten in einem Einstellbetrieb, der
jeweils durch das Schleifenschlußsignal (S) beim Beginn
eines Verbindungsaufbaus eingeleitet wird, aufgrund
eines Testimpulses eingestellt werden, der anstelle
des auf der Vierdrahtseite (HO) ankommenden Signals
der Gabelschaltung zugeführt wird und dessen Echosignale
nach Mittelung mit entsprechenden bisher gespeicherten
Koeffizienten als neue Koeffizienten eingespeichert
werden.

2. Teilnehmerschaltung nach Anspruch 1, dadurch gekennzeichnet, daß das Filter als Rekursivfilter ausgestaltet
ist.

3. Teilnehmerschaltung nach Anspruch 1, dadurch gekennzeichnet, daß das Filter als Transversalfilter ausgestaltet ist.

4. Teilnehmerschaltung nach Anspruch 3, dadurch gekennzeichnet, daß das Filter außer einem die Laufzeitkette darstellenden ersten Schieberegisters (SRI), dem die von der Vierdrahtseite (HO) herkommenden und auch an die Gabelschaltung gelangenden Signale zugeführt werden, ein zweites gleich langes Schieberegister (SRK) für die Speicherung der Bewertungskoeffizienten aufweist, dessen Inhalt in beiden Richtungen verschoben werden kann, daß bei diesem Schieberegister (SRK) im Einstellbetrieb nacheinander in der einen Schieberichtung die enthalenen, während des vorhergegangenen Einstellbetriebs gebildeten Koeffizienten an einem Ende ausgeschoben und mit den Echosignalen des Testimpulses zum Zwecke der Mittelung zusammengeführt werden, woraufhin am anderen Ende die dementsprechend korrigierten Koeffizienten wieder eingeschrieben werden, daß im Kompensationsbetrieb zunächst das auf der Vierdrahtseite ankommende Signal in die erste Stufe des ersten Schieberegisters (SRI) eingeschrieben wird und danach beide Schieberegister (SRI, SRK) zu einem Ring geschlossen und mit dem gleichen Schiebetakt beaufschlagt werden, wobei beim zweiten Schieberegister (SRK) das Schieben nunmehr in der anderen Schieberichtung erfolgt und wobei die dabei an den Serienausgängen der beiden Schieberegister auftretenden Signale in einem Multiplizierer (M) miteinander verknüpft werden, dessen Ausgangssignale in einem Summierer (Sum) aufsummiert werden, der dann die Kompensationsgrößen liefert, die in einem Subtrahierer (Sub) von den von der Gabelschaltung (G) herkommenden echobehafteten Signalen subtrahiert werden.

0012247

5 Teilnehmerschaltung nach einem der vorhergehenden
Ansrüche, dadurch gekennzeichnet, daß das Schleifenschlußsignal entprellt und erst nach einer der
Einschwingzeit der Anschlußleitung entsprechenden
Verzögerung wirksam gemacht wird.

FIG 1

0012247

FIG 2

**Europäisches Patentamt**

**EUROPÄISCHER RECHERCHENBERICHT**

0012247

Nummer der Anmeldung

EP 79 10 4614

| EINSCHLÄGIGE DOKUMENTE | | | KLASSIFIKATION DER ANMELDUNG (Int.Cl. 3) |
|---|---|---|---|
| **Kategorie** | Kennzeichnung des Dokuments mit Angabe, soweit erforderlich, der maßgeblichen Teile | betrifft Anspruch | H 04 Q 11/04 H 04 B 3/23 |
| | TELECOMMUNICATIONS AND RADIO ENGINEERING, Band 32/33, Heft 8, August 1978, New York, US, SNEGOV: "Adaptive compensation of electrical echo in audio-frequency channels", Seiten 13-18 \* Seite 15, Zeilen 11-24 \* | 1,4 | |
| | NATIONAL TELECOMMUNICATIONS CONFERENCE, Dezember 3-6, 1978, Birmingham, US, NIELSEN et al.: "A digital hybrid for two-wire digital subscriber loops", Seiten 21.2.1-21.2.7 \* Seite 21.2.1; Zusammenfassung; Seiten 21.2.1 bis 21.2.3, Absatz 2 \* | 1,3,4 | **RECHERCHIERTE SACHGEBIETE (Int. Cl. 3)** H 04 Q 11/04 H 04 M 1/58 9/08 H 04 B 3/23 H 04 L 5/14 |
| | INTERNATIONAL CONFERENCE ON DIGITAL SATELLITE COMMUNICATIONS, 23-25 Oktober 1978, Montreal, CA, A. RASEKI et al.: "A microprocessor echo canceller", Seiten 219-224 \* Seiten 219,220, Absatz 2; Seiten 221 bis 223, Absatz 4 \* | 1,3,4 | |
| | NATIONAL TELECOMMUNICATIONS CONFERENCE, 29,30 November und 1. Dezember 1976, Dallas, US, VAN DEN ELZEN et al.: "Echo cancellation in a 2-wire full-duplex data transmission system with bepolar encoding", Seiten 8.4-1 bis 8.4-6 ./. | 1,3,4 | **KATEGORIE DER GENANNTEN DOKUMENTE** X: von besonderer Bedeutung A: technologischer Hintergrund O: nichtschriftliche Offenbarung P: Zwischenliteratur T: der Erfindung zugrunde liegende Theorien oder Grundsätze E: kollidierende Anmeldung D: in der Anmeldung angeführtes Dokument L: aus andern Gründen angeführtes Dokument |

Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Den Haag | 20-02-1980 | DE MUYT |

EPA form 1503.1 06.78

Europäisches
Patentamt

**EUROPÄISCHER RECHERCHENBERICHT**

0012247

Nummer der Anmeldung

EP 79 10 4614

-2-

| Kategorie | Kennzeichnung des Dokuments mit Angabe, soweit erforderlich, der maßgeblichen Teile | betrifft Anspruch |
|---|---|---|
| | x Seite 8.4-1, linke Spalte, Zeile 16 bis Seite 8.4-2, linke Spalte, Zeile 23; Seite 8.4-5, rechte Spalte, Zeile 16 bis Seite 8.4-6, linke Spalte, Zeile 21 x | |
| | -- | |
| | PROCEEDINGS OF THE IEEE, Band 65, Heft 3, März 1977, New York, US, DEMYTKO et al.: "Echo cancellation on time-variant circuits", Seiten 444-453 | 1-4 |
| | x Seite 446, linke Spalte, Zeilen 15-39; Seite 448; Bild 7 x | |
| | -- | |
| | ELECTRONICS AND COMMUNICATIONS IN JAPAN, Band 51-A, Heft 7, August 1968, Washington, US, MIURA et al.: "Blockless echo suppressor", Seiten 10-18 | 1,4,5 |
| | x Seiten 12-14; Absatz 4 x | |
| | -- | |
| | US - A - 3 860 768 (WEHRMANN) | 1,3-5 |
| | x Spalte 3, Zeile 64 bis Spalte 6, Zeile 51 x | |
| | -- | |
| | US - A - 4 126 770 (SATO et al) | 1,4,5 |
| | x Spalte 1, Zeilen 16-29; Spalte 3, Zeilen 31-63 x | |
| | -- | |
| | FR - A - 2 277 470 (C.I.T.-ALCATEL) | 1,3 |
| | x Seite 2, Zeile 2 bis Seite 3, ./. | |

EINSCHLÄGIGE DOKUMENTE

KLASSIFIKATION DER ANMELDUNG (Int.Cl. 3)

RECHERCHIERTE SACHGEBIETE (Int. Cl. 3)

Europäisches
Patentamt

**EUROPÄISCHER RECHERCHENBERICHT**

0012247

Nummer der Anmeldung

EP 79 10 4614

-3-

| **EINSCHLÄGIGE DOKUMENTE** | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | Zeile 32; Seite 4, Zeile 27 bis Seite 6, Zeile 28 x | | |
| | -- | | |
| A | IEEE TRANSACTIONS ON AUDIO AND ELECTROACOUSTICS, Band AU-18, Heft 4, Dezember 1970, New York, US, KUNDIG: "Digital filtering in PCM telephone systems", Seiten 412-417 | 1 | |
| | x Seite 416, rechte Spalte, Zeile 20 bis Seite 417, linke Spalte, Zeile 7; Bild 11 x | | |
| | -- | | RECHERCHIERTE SACHGEBIETE (Int. Cl. 3) |
| P | TELCOM REPORT, Band 2, Heft 4, August 1979 Berlin, DE, SCHWEIZER: "Planung von Niederfrequenzübertragungen im Digital-Fernsprechnetz und im gemischten Analog-Digital-Netz", Seiten 261-269 | 1 | |
| | x Gesamter Artikel x | | |
| | ---- | | |